# EUROPÄISCHE PATENTSCHRIFT

(11) **EP 3 324 070 B1**
(45) Veröffentlichungstag und Bekanntmachung des Hinweises auf die Patenterteilung: **04.03.2020**
(21) Anmeldenummer: 17001869.1
(22) Anmeldetag: 15.11.2017
(51) Int. Cl.: F16F 1/02, B60N 2/815, B60N 2/844

(54) **FEDER, VERWENDUNG EINES KUNSTSTOFFSCHLAUCHS ALS FEDER UND AUSSTATTUNGSTEIL EINES FAHRZEUGINNENRAUMS**
SPRING, USE OF A PLASTIC HOSE AS A SPRING AND FITTING PART FOR THE INTERIOR OF A VEHICLE
RESSORT, UTILISATION D'UN FLEXIBLE EN PLASTIQUE EN TANT QUE RESSORT ET PIÈCE D'ÉQUIPEMENT D'UN HABITACLE DE VÉHICULE

(30) Priorität: 17.11.2016 DE 102016013721
(43) Veröffentlichungstag der Anmeldung: 23.05.2018
(73) Patentinhaber: GRAMMER AG, 92224 Amberg (DE)
(72) Erfinder: Kober, Steve, 08233 Treuen (DE)
(74) Vertreter: Roche, von Westernhagen & Ehresmann

(56) Entgegenhaltungen:
- DE-A1-102011 010 047
- US-A1- 2005 077 772
- US-B2- 9 265 634

## Beschreibung

Die Erfindung betrifft zunächst eine Feder.

Eine solche Feder ist z.B. aus der DE 10 2006 026 029 A1 bekannt. Mittels einer Verriegelungsvorrichtung ist das Kopfanlageteil einer Kopfstütze in unterschiedlichen Höhenposition relativ zur Rückenlehne eines Fahrzeugsitzes verriegelbar und entriegelbar. Zur Entriegelung durch einen Benutzer ist ein Tastknopf vorgesehen, welcher von einem Federelement belastet ist. Beim Betätigen des Tastknopfes wird das Federelement gespannt, so dass Rückstellkräfte eine Rückführung des Tastknopfes in die Ausgangslage bewirken, sobald der Tastknopf nicht mehr betätigt wird.

Auch in der EP 2 608 988 B1 ist eine Vorrichtung vorgesehen, mit welcher ein Kopfanlageteil in unterschiedlichen Höhenpositionen verriegelbar ist. Die Kopfstütze weist eine Betätigungstaste auf, die nach der Betätigung von einer Feder in die Ausgangslage zurückbewegt wird.

Das Kunststoffformteil gemäß DE 10 2011 010 047 A1 weist mehrere Federelemente 8 aus Kunststoff auf, die schraubenfederartig ausgebildet sind. Im weitesten Sinne kann der schraubenfederartige Aufbau auch als Schlauch betrachtet werden. Der Schlauch weist einen Kunststoffdraht auf.

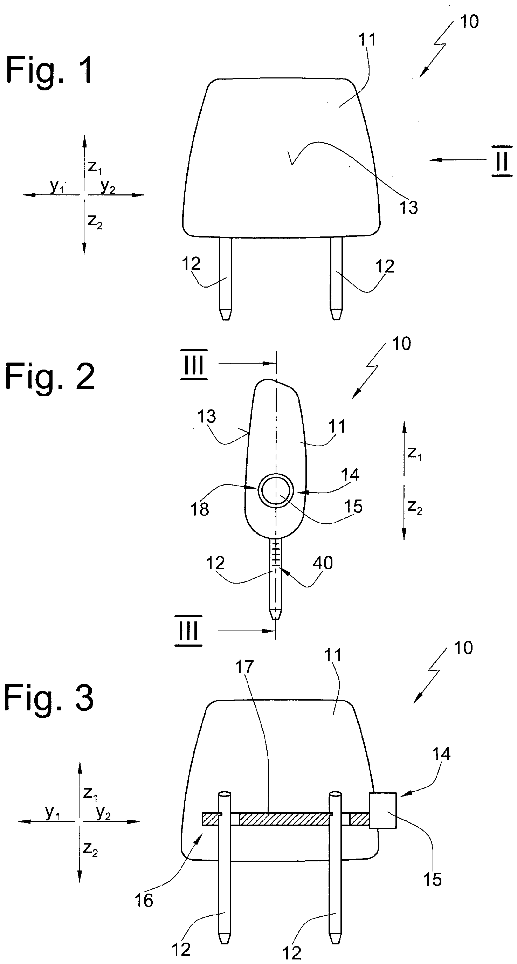

In Absatz 21 der US 2005/077772 A2 sind zur Ausübung einer Kraft auf Riegelelemente eines Kopfstützenlagers Kunststofffedern erwähnt. In den Figuren 2 und 3 sowie z.B. in Absatz 90 ist eine Schraubenfeder offenbart, die aus einem gewundenem Draht ausgebildet ist. Das Material ist nicht offenbart.

Derartige aus den vorbezeichneten Druckschriften bekannte Federn sind üblicherweise von Metallfedern gebildet. Diese haben den Nachteil, dass sie nach der Betätigung oder durch Erschütterung, z.B. bei einer Fahrt auf unebener Strecke, schwingen und dabei unerwünschte Surr-Geräusche verursachen.

Es war Aufgabe der Erfindung, eine Feder zu schaffen, bei welcher störende Geräusche aufgrund von Schwingungen nicht auftreten.

Die Aufgabe wurde gemäß einem ersten Aspekt der Erfindung gelöst durch eine Feder mit den Merkmalen des Anspruchs 1.

Die Feder umfasst einen ersten Endbereich und einen zweiten Endbereich. Der erste Endbereich kann z.B. mit einem ersten Teil in Kontakt stehen, während der zweite Endbereich z.B. zur Anlage an einem zweiten Teil vorgesehen sein kann. In einer entspannten ersten Position der Feder weisen die Endbereiche einen ersten Abstand und in wenigstens einer gespannten zweiten Position einen zweiten Abstand voneinander auf. Die Feder ist wenigstens teilweise von einem Kunststoff gebildet. Insbesondere ist die Feder vollständig aus Kunststoff gefertigt. Die Feder kann z. B. durch Ablängen eines schlauchförmigen Endlosgewebes hergestellt werden, wobei beide Federenden z. B. durch Heißverstemmen versiegelt werden und somit eine Ringstruktur bilden.

Mit der erfindungsgemäßen Feder treten keine unerwünschten Geräusche bei der Verformung der Feder oder durch Erschütterung auf.

Die Feder ist schtauchförmig ausgebildet. D.h., die Feder umfasst eine als Hohlzylinder ausgebildete Wand und einen Innenraum innerhalb der Wand. Auf die Dichtigkeit der Wand kommt es nicht an. Hier ist die Federeigenschaft der Wand wesentlich. Die Wand weist z.B. wenigstens eine Aussparung auf. Die Aussparungen können z.B. zwischen mehreren Filamenten der Feder ausgebildet sein.

Die Feder ist z.B. als Druckfeder oder als Zugfeder ausgebildet. Bei dem Entfernen oder bei dem Annähern des zweiten Endbereichs in Bezug auf den ersten Endbereich wird die Feder entgegen einer elastischen Rückstellkraft verformt und dabei gespannt. Bei nachlassender Kraft auf die Feder bewegen sich der erste Endbereich und der zweite Endbereich in ihre ursprüngliche Relativposition zurück, wobei sich die Feder entspannt.

Die Feder ist z.B. in Richtung einer Längsachse komprimierbar oder extendierbar ist. Mit dieser Ausführungsform wird ein relativ großer Federweg gewährleistet. Bei einer Komprimierung der Feder kann diese sich z.B. aufwölben. Ist die Feder schlauchförmig ausgebildet, kann sich die Feder bei einer Komprimierung z.B. radial aufwölben. Bei einer Extension schnürt sich die Feder z.B. ein. Eine schlauchförmige Feder schnürt sich z.B. radial ein.

Die Feder umfassen eine Vielzahl von Filamenten. Die Filamente erstrecken sich z.B. von dem ersten Endbereich der Feder zu dem zweiten Endbereich. Die Filamente können, aber müssen nicht parallel zu einer Längsachse der Feder ausgebildet sein.

Z.B. bildet wenigstens ein Filament zu einer Längsachse der Feder einen Winkel.

Mehrere Filamente bilden z.B. ein Gewebe. Im Sinne der Erfindung bedeutet Gewebe, dass die Filamente eine besondere Anordnung aufweisen, so dass sie einen Verbund bilden. Gewebe bedeutet im Sinne der Erfindung aber nicht, dass die Filamente rechtwinklig zueinander angeordnet sein müssen, wie Kett- und Schussfäden in einem textilen Gewebe.

Das Gewebe weist z.B. eine erste Art von Filamenten und wenigstens eine zweite Art von Filamenten auf, wobei die erste Art von Filamenten relativ zu der zweiten Art von Filamenten unterschiedlich ausgerichtet sind. Die zweite Art von Filamenten kann z.B. mit der ersten Art von Filamenten einen Winkel bilden.

Die Feder kann z.B. wenigstens zwei Schichten von Filamenten bilden. Die erste Art von Filamenten und die zweite Art von Filamenten sind z.B. in unterschiedlichen Schichten angeordnet. Bei einer ebenen Anordnung sind das z.B. übereinander angeordnete Schichten. In einer schlauchförmigen Anordnung sind die Schichten z.B. radial hintereinander angeordnet. Die Feder kann z.B. wenigstens zwei Schichten einer ersten Art von Filamenten und / oder einer zweiten Art von Filamenten aufweisen.

Das Filament ist z.B. an wenigstens einem Endbereich mit einer Ringstruktur verbunden. Insbesondere ist das Filament mit einem ersten Endbereich mit einer ersten Ringstruktur und mit einem zweiten Endbereich mit einer zweiten Ringstruktur verbunden. Mittels der Ringstrukturen sind die einzelnen Filamente z.B. miteinander verbunden. Z.B. können zwischen Ringstrukturen an den Endbereichen der Filamente weitere Ringstrukturen zur Verbindung der Filamente angeordnet sein.

Die oben gestellte Aufgabe wird gemäß einem zweiten Aspekt gelöst durch die Verwendung eines Kunststoffschlauchs als Feder gemäß den Merkmalen des Anspruchs 7.

Der Kunststoffschlauch umfasst einen ersten Endbereich und einen zweiten Endbereich. Der erste Endbereich und der zweite Endbereich weisen in einer entspannten ersten Position des Kunststoffschlauchs einen ersten Abstand und in wenigstens einer gespannten zweiten Position einen zweiten Abstand voneinander auf. In der zweiten Position ist der Kunststoffschlauch z.B. komprimiert oder extendiert.

Die aus Kunststoffschlauch gebildete Feder erzeugt weder bei der Verformung noch bei einer Erschütterung unerwünschte Geräusche.

Außerdem betrifft die Erfindung ein Ausstattungsteil eines Fahrzeuginnenraums. Ein solches Ausstattungsteil ist z.B. eine Kopfstütze. Die Betätigungsvorrichtung zur Betätigung einer Verriegelung umfasste eine Feder.

Zur Vermeidung von Wiederholungen wird auf den oben zu dem ersten Aspekt erwähnten Stand der Technik verwiesen.

Im Stand der Technik wies die üblicherweise metallische Feder den Nachteil auf, dass sie durch Erschütterung in Schwingungen versetzt wurde und dadurch unerwünschte Geräusche erzeugte.

Es war Aufgabe der Erfindung ein Ausstattungsteil zu schaffen, welches keine unerwünschten Geräusche erzeugt.

Die Aufgabe wurde gelöst durch ein Ausstattungsteil mit den Merkmalen des Anspruchs 8.

Das Ausstattungsteil umfasst erstes Teil und ein zu dem ersten Teil relativbewegbares zweites Teil, wobei das zweite Teil zwischen einer ersten Position und einer zweiten Position verstellbar ist. Eine Feder belastet das zweite Teil in die erste Position.

Die Feder des Ausstattungsteils ist erfindungsgemäß entsprechend dem ersten Aspekt der Erfindung ausgebildet.

Bezüglich der Vorteile wird auf die Ausführungen zu dem ersten Erfindungsaspekt verwiesen.

Weitere Vorteile der Erfindung ergeben sich anhand eines in den Fig. dargestellten Ausführungsbeispiels. Es zeigen:
Fig. 1 eine Frontansicht einer Kopfstütze mit einem Kopfkasten und mit Tragstangen zur Lagerung an einem nicht dargestelltem Fahrzeugsitz,
Fig. 2 eine Ansicht gemäß Ansichtspfeil II in Fig. 1, Fig. 3 eine Schnittansicht gemäß Ansichtspfeil III - III in Fig. 2, wobei sich die Betätigungsvorrichtung in einer unbetätigten Position befindet,
Fig. 4 eine Ausschnittdarstellung gemäß Ausschnittlinie IV in Fig. 3,
Fig. 5 der Ausschnitt in Anlehnung an Fig. 4, wobei die Betätigungsvorrichtung sich in der betätigten Position befindet,
Fig. 6 die Feder als Einzelteil in einer entspannten Position,
Fig. 7 die Feder als Einzelteil in einer gespannten Position,
Fig. 8 eine Schnittdarstellung gemäß Schnittlinie VIII - VIII in Fig. 6.

Eine Kopfstütze insgesamt wird in den Fig. mit dem Bezugszeichen 10 bezeichnet.

Die Kopfstütze 10 umfasst gemäß Fig. 1 ein Kopfteil 11 sowie Tragstangen 12, mit welchen das Kopfteil 11 an der Rückenlehne eines nicht dargestellten Fahrzeugsitzes lagerbar ist. An dem Kopfteil ist eine Kopfanlagefläche 13 ausgebildet, die als Widerlager für den Kopf eines Fahrzeuginsassen dient.

Das Kopfteil 11 ist relativ zu den Tragstangen in Richtung z1 und z2 bewegbar gelagert. Mittels einer Verriegelungsvorrichtung 16 (siehe Fig. 3) kann das Kopfteil 11 relativ zu den Tragstangen 12 in unterschiedlichen Relativpositionen arretiert werden. Dazu ist an den Tagstangen 12 eine Anordnung von mehreren Rastkerben 40 ausgebildet (siehe Fig. 2). In einer Riegelposition ist ein dem Kopfteil 11 zugeordneter Riegel in Eingriff mit einer der Rastkerben, so dass eine Bewegung des Kopfteils 11 in eine der Richtungen z1 oder z2 oder in beide Richtungen z1 und z2 verhindert wird.

Das Kopfteil 11 umfasst gemäß Fig. 3 einen in Richtung y1 und y2 bewegbaren Schieber 17. Dem Schieber 17 sind zwei Riegel zugeordnet, wobei jeweils ein Riegel mit einer der Rastkerben 40 zusammenwirkt. In einer Löseposition der Verriegelungsvorrichtung 16 ist der Riegel außer Eingriff mit den Rastkerben und das Kopfteil 11 ist in Richtung z1 oder z2 bewegbar.

Die Verriegelungsvorrichtung 16 kann mittels einer Betätigungsvorrichtung 14 zwischen der Riegelposition und der Löseposition verstellt werden. Die Betätigungsvorrichtung 14 umfasst ein Stellelement 15, mit welchem ein Benutzer durch einen Druck auf eine Betätigungsfläche 28 des Stellelements 15 in Richtung y1 die Betätigungsvorrichtung zwischen einer Ruheposition und einer Betätigungsposition verstellen kann. Die Verriegelungsvorrichtung 16 ist in die Löseposition verstellbar, indem das Stellelement 15 aus einer Ruheposition in Richtung y1 in eine Betätigungsposition bewegt wird. Das Stellelement 15 ist mit dem Schieber 17 bewegungsverbunden. Das Stellelement 15 stellt sich automatisch in Richtung y2 in die Ruheposition zurück, was nachfolgend näher erläutert wird.

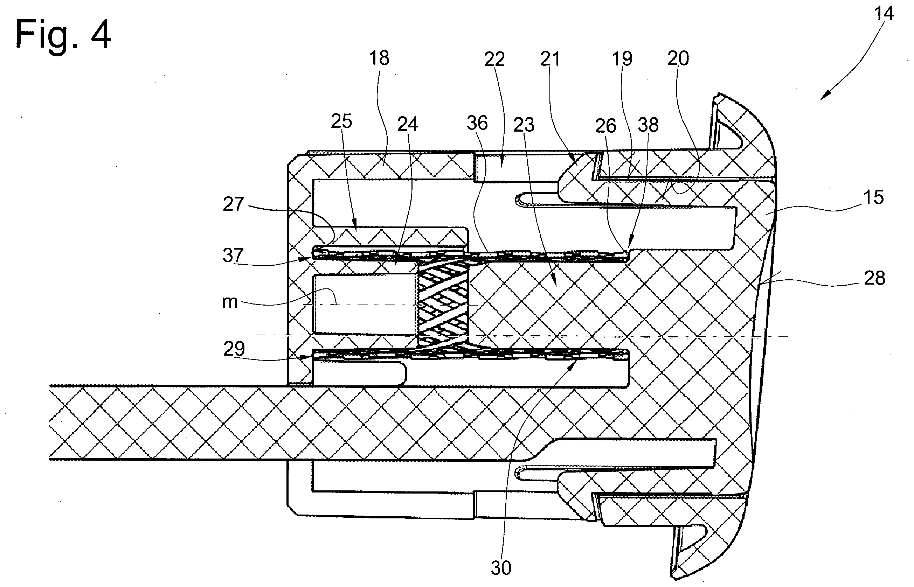

In Fig. 4 ist die Betätigungsvorrichtung 14 als Baugruppe dargestellt. Die Betätigungsvorrichtung 14 umfasst ein topfförmiges Gehäuse 18, welches fest am Kopfteil 11 befestigt ist. Von dem Gehäuse 18 wird das Stellelement 15 bei der Bewegung zwischen der Ruheposition und der Betätigungsposition geführt. Eine Außenfläche 19 des Stellelements 15 gleitet dabei entlang einer Innenfläche 20 des Gehäuses 18. Ein an dem Stellelement 15 ausgebildeter, radial vorstehender Haken 21 ist in einer Aussparung 22 geführt, die in dem Gehäuse 18 ausgebildet ist. Die Aussparung 22 hat die Funktion einer Kulisse, um die Bewegung des Stellelements 15 zu Führen und zu begrenzen.

Das Stellelement 15 ist mit einem Sitz 23 und das Gehäuse 18 ist mit einem Sitz 24 versehen. Der Sitz 23 und der Sitz 24 sind einander zugewandt. Beide Sitze 23 und 24 haben die Form eines kreiszylindrischen Vorsprungs. Auf dem Sitz 24 ist ein erster Endbereich 37 einer Feder 36 angeordnet und auf dem Sitz 23 ist ein zweiter Endbereich 38 der Feder 36 angeordnet.

Der erste Endbereich 37 umgibt den Sitz 24 koaxial und ist derart auf den Sitz 24 aufgesetzt, dass eine Stirnfläche des Endbereichs 37 an einer Bodenfläche 27 anliegt. Der zweite Endbereich 38 umgibt den Sitz 23 koaxial und ist soweit auf den Sitz 23 aufgesetzt, dass eine Stirnfläche des Endbereichs 38 an einer Schulter 26 anliegt.

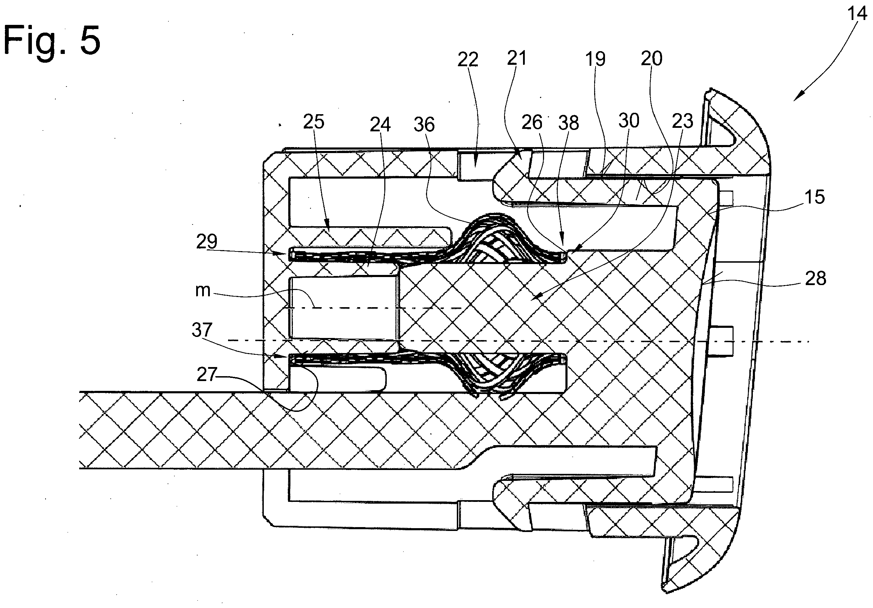

Die Ruheposition ist in Fig. 4 und die Betätigungsposition ist in Fig. 5 dargestellt. In den Fig. 4 und 5 ist ein Führungssteg 25 erkennbar, der die elastische Verformung der Feder 36 auf einen bestimmten Bereich begrenzt.

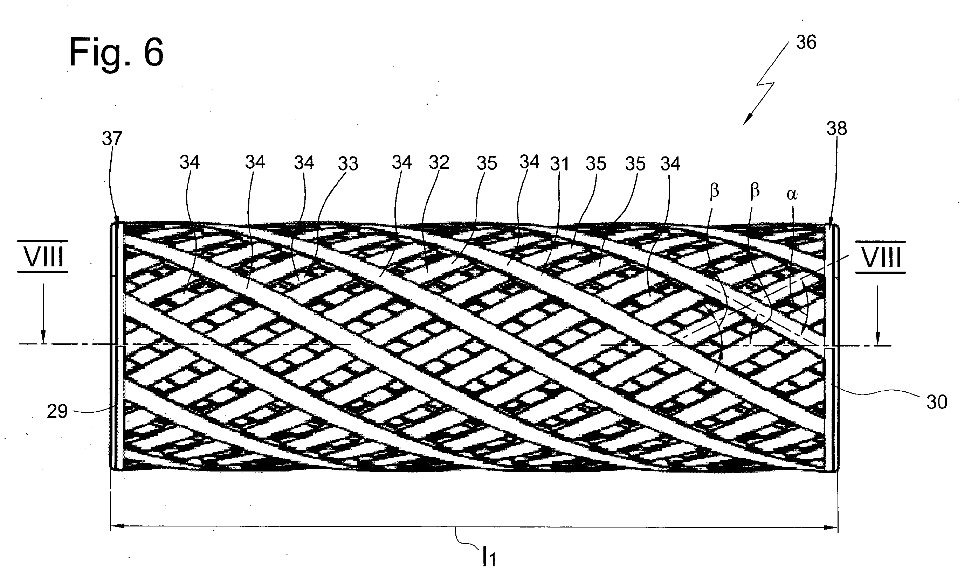

In Fig. 6 ist die Feder 36 als Einzelteil dargestellt. Es ist erkennbar, dass die Feder 36 Filamente 34 und 35 umfasst. Die Filamente 34 bilden mit den Filamenten 35 einen Winkel a, so dass sich die Filamente 34 und 35 kreuzen. Die Filamente 34 bilden darüber hinaus mit der Längsachse m einen Winkel β. D.h., die Filamente 34 und 35 sind nicht parallel zu der Längsachse m angeordnet.

Insgesamt umfasst die Feder 36 drei Schichten 31, 32 und 33, die radial hintereinander angeordnet sind. Eine äußere Schicht 31 ist von den Filamenten 34, eine mittlere Schicht 32 von den Filamenten 35 und eine innere Schicht 33 von den Filamenten 34 gebildet. Alle Filamente 34 und 35 sind an einem Ende mit einer Ringstruktur 29 des ersten Federendes 37 und an einem gegenüberliegenden Ende mit einer Ringstruktur 30 des zweiten Federendes 38 fest verbunden.

In Fig. 6 ist die Feder in der ungespannten Position gezeigt. Die ungespannte Position nimmt die Feder 36 in der Ruheposition der Betätigungsvorrichtung ein. Gemäß einer alternativen Ausführung könnte die Feder 36 in der Ruheposition bereits einer leichten Vorspannung unterliegen. In der Ruheposition hat die Feder 36 eine Länge l1.

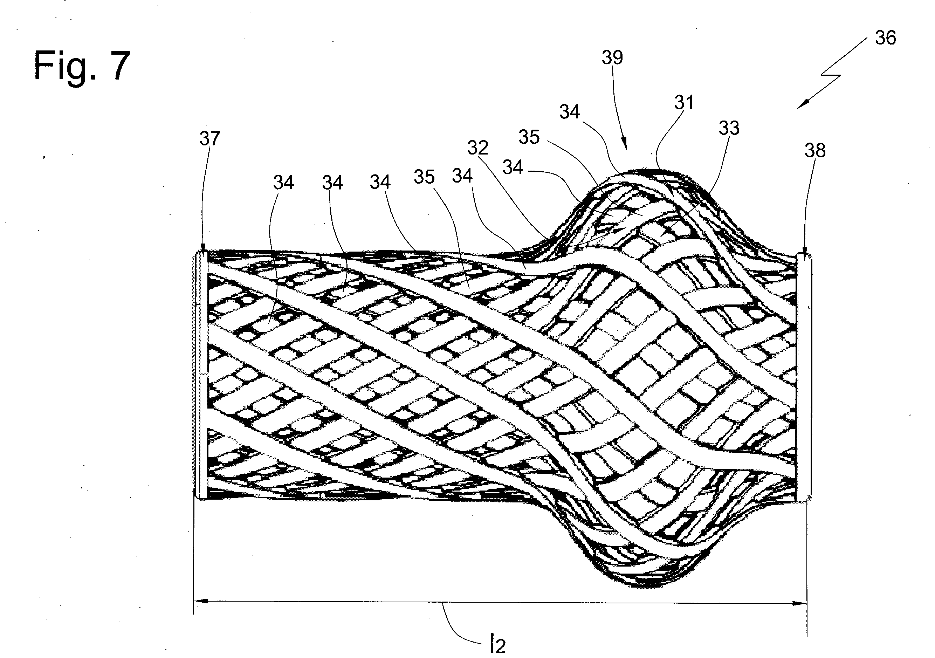

In Fig. 7 ist die Feder in der gespannten Position gezeigt. Die gespannte Position nimmt die Feder in der Betätigungsposition der Betätigungsvorrichtung 14 ein. In der gespannten Position hat die Feder 36 eine Länge l2. Die Länge l2 ist kleiner als die Länge l1, weil die Feder 36 im vorliegenden Ausführungsbeispiel in der gespannten Position komprimiert ist. Aufgrund der Komprimierung bildet die Feder 36 eine ringförmige, radial vorragende Wölbung 39 aus.

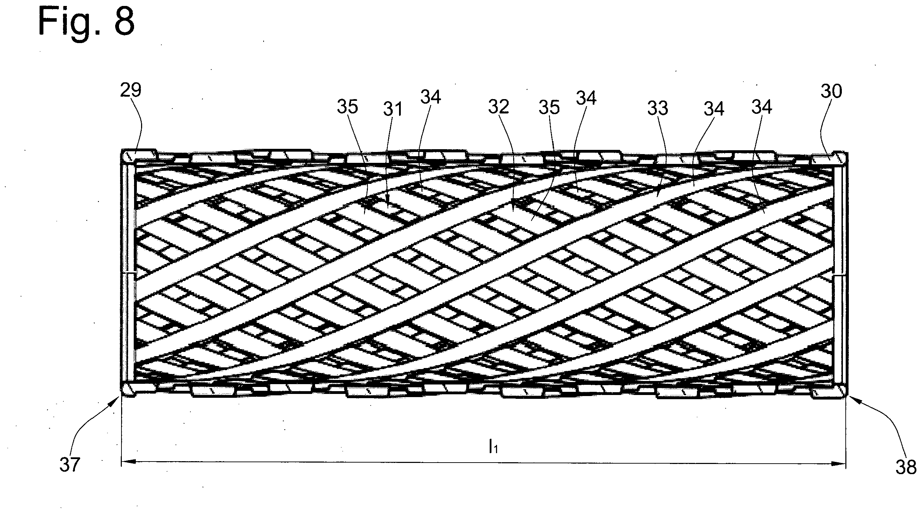

In Fig. 8 ist eine Längsschnittdarstellung durch die Feder 36 gezeigt.

Unabhängig von der Position verursacht die Feder 36 keine Geräusche aufgrund von Schwingungen, wie es z.B. bei Metallfedern der Fall ist.

## Patentansprüche

1. Feder zur Bewegung wenigstens eines Teils einer Ausstattungs-Vorrichtung des Fahrzeug-Innenraums, wobei die Feder (36) einen ersten Endbereich (37) und einen zweiten Endbereich (38) aufweist, wobei die Endbereiche (37, 38) in einer entspannten ersten Position der Feder (36) einen ersten Abstand (l2) und in wenigstens einer gespannten zweiten Position einen zweiten Abstand (l2) voneinander aufweisen, **dadurch gekennzeichnet, dass** die Feder wenigstens teilweise aus Kunststoff gebildet ist, wobei die Feder schlauchförmig ausgebildet ist und eine Vielzahl von sich in Richtung der Längsachse erstreckenden Filamenten umfasst.

2. Feder nach Anspruch 1, **dadurch gekennzeichnet, dass** die Feder (36) schlauchförmig ausgebildet ist.

3. Feder nach Anspruch 1 oder 2, **dadurch gekennzeichnet, dass** die Feder (36) als Druckfeder oder als Zugfeder ausgebildet ist.

4. Feder nach einem der Ansprüche 1 bis 3, **dadurch gekennzeichnet, dass** die Feder (36) in Richtung (y1, y2) parallel zu einer Längsachse (m) der Feder (36) komprimierbar oder extendierbar ist.

5. Feder nach Anspruch 4, **dadurch gekennzeichnet, dass** das Filament (34, 35) zu der Längsachse (m) der Feder einen Winkel (β) bildet.

6. Feder nach Anspruch 4 oder 5 **dadurch gekennzeichnet, dass** ein erster Endbereich des Filaments (34, 35) mit einer ersten Ringstruktur (29) und ein zweiter Endbereich des Filaments (34, 35) mit einer zweiten Ringstruktur (30) verbunden ist.

7. Verwendung eines Schlauchs aus Kunststoff als Feder (36) zur Bewegung von zwei relativbewegbaren Teilen von Ausstattungsteilen des Fahrzeug-Innenraums, wobei der aus einer Vielzahl sich in Richtung der Längsachse erstreckender Filamente gebildete Schlauch einen ersten Endbereich (37) und einen zweiten Endbereich (38) aufweist, wobei die Endbereiche (37, 38) in einer entspannten ersten Position des Schlauchs einen ersten Abstand (l1) und in wenigstens einer gespannten zweiten Position einen zweiten Abstand (l2) voneinander aufweisen.

8. Ausstattungsteil eines Fahrzeug-Innenraums umfassend ein erstes Teil und ein zu dem ersten Teil relativbewegbares zweites Teil, wobei das zweite Teil zwischen einer ersten Position und einer zweiten Position verstellbar ist, wobei eine Feder (36) das zweite Teils in die erste Position belastet, **dadurch gekennzeichnet, dass** die Feder (36) nach einem der Ansprüche 1 bis 6 ausgebildet ist.

9. Ausstattungteil nach Anspruch 8, **dadurch gekennzeichnet, dass** das Ausstattungsteil eine Kopfstütze (10) ist.

## Claims

1. Spring, to move at least one part of an equipment apparatus of a vehicle interior, wherein the spring (36) has a first end section (37) and a second end section (38), wherein the end sections (37, 38) have a first distance (l2) from each other in a slackened first position of the spring (36) and a second distance (l2) from each other in at least one tensioned second position, **characterized in that** the spring is at least partially made of plastic, whereby the spring is designed with a tubular shape comprising a plurality of filaments extending in the direction of the longitudinal axis.

2. Spring according to claim 1, **characterized in that** the spring (36) is designed with a tubular shape.

3. Spring according to claim 1 or 2, **characterized in that** the spring (36) is designed as a pressure spring or as a tension spring.

4. Spring according to one of the claims 1 to 3, **characterized in that** the spring (36) can be extended or compressed into a direction (y1, y2) parallel to a longitudinal axis (m) of the spring (36).

5. Spring according to claim 4, **characterized in that** the filament (34, 35) forms an angle (β) with the longitudinal axis (m) of the spring.

6. Spring according to claim 4 or 5, **characterized in that** a first end section of the filament (34, 35) is connected to a first ring structure (29) and a second end section of the filament (34, 35) is connected with a second ring structure (30).

7. Use of a hose made of plastic as a spring (36) to move two equipment parts of the vehicle interior space, movable relative to each other, wherein the house consisting of a plurality of filaments extending in the direction of the longitudinal axis, has a first end section (37) and a second and section (38), wherein the end sections (37, 38) have a first distance (l1) from each other in a slackened first position and have a second distance (l2) from each other in at least one tensioned second position.

8. Equipment part of a vehicle interior space comprising a first part and a second part that can be moved in relation to the first part, wherein the second part can be adjusted between a first position and a second position, wherein a spring (36) urges the second part into the first position, **characterized in that** the spring (36) is designed according to one of the claims 1 to 6.

9. Equipment part according to claim 8, **characterized in that** the equipment part is a head support (10).

## Revendications

1. Ressort pour mouvoir au moins une pièce d'un dispositif d'équipement d'un habitacle de véhicule, ce ressort (36) possédant une première extrémité (37) et une deuxième extrémité (38), ces extrémités (37, 38) présentant entre elles une première distance (l1) dans une première position non tendue du ressort (36) et une deuxième distance (l2) dans au moins une deuxième position tendue, **caractérisé en ce que** ce ressort est fait au moins partiellement de plastique, que ce ressort est configuré en forme de tuyau et qu'il comprend une multitude de filaments s'étendant dans la direction de l'axe longitudinal.

2. Ressort selon la revendication 1, **caractérisé en ce que** ce ressort (36) est configuré en forme de tuyau.

3. Ressort selon la revendication 1 ou 2, **caractérisé en ce que** ce ressort (36) est configuré comme un ressort de compression ou comme un ressort de traction.

4. Ressort selon une des revendications 1 à 3, **caractérisé en ce que** ce ressort (36) est compressible ou extensible dans une direction (y1, y2) parallèle à son axe longitudinal (m).

5. Ressort selon la revendication 4, **caractérisé en ce que** le filament (34, 35) forme un angle () avec l'axe longitudinal (m) du ressort.

6. Ressort selon la revendication 4 ou 5, **caractérisé en ce qu'**une première extrémité du filament (34, 35) est reliée à une première structure annulaire (29) et qu'une deuxième extrémité du filament (34, 35) est reliée à une deuxième structure annulaire (30).

7. Utilisation d'un tuyau en plastique comme ressort (36) pour mouvoir deux pièces mobiles entre elles appartenant à des équipements de l'habitacle de voiture, le tuyau constitué d'une multitude de filaments qui s'étend dans la direction de l'axe longitudinal possédant une première extrémité (37) et une deuxième extrémité (38), ces extrémités (37, 38) présentant entre elles une première distance (l1) dans une première position non tendue du tuyau et une deuxième distance (l2) dans au moins une deuxième position tendue.

8. Equipement d'un habitacle de voiture comprenant une première pièce et une deuxième pièce mobile par rapport à la première pièce, la deuxième pièce pouvant être réglée entre une première position et une deuxième position, un ressort (36) poussant la deuxième pièce dans la première position, **caractérisé en ce que** le ressort (36) est configuré selon une des revendications 1 à 6.

9. Equipement selon la revendication 8, **caractérisé en ce que** cet équipement est un appuie-tête (10).
